# EUROPÄISCHE PATENTSCHRIFT

(11) **EP 0 972 728 B1**
(45) Veröffentlichungstag und Bekanntmachung des Hinweises auf die Patenterteilung: **26.06.2002**
(21) Anmeldenummer: 99890042.7
(22) Anmeldetag: 05.02.1999
(51) Int. Cl.: B65G 47/38, B65D 90/66

(54) **Anlage für den Transport von Schüttgut**
Installation for the transport of bulk material
Installation pour le transport de matériaux en vrac

(30) Priorität: 14.07.1998 AT 121598
(43) Veröffentlichungstag der Anmeldung: 19.01.2000
(73) Patentinhaber: Innova Patent GmbH, 6960 Wolfurt (AT)
(72) Erfinder: Trieb, Herbert, 6922 Wolfurt (AT)
(74) Vertreter: Atzwanger, Richard, Dipl.-Ing. Patentanwalt

(56) Entgegenhaltungen:
- EP-A- 0 391 575
- US-A- 5 346 052
- PATENT ABSTRACTS OF JAPAN vol. 006, no. 033 (M-114), 27. Februar 1982 (1982-02-27) & JP 56 149909 A (KOMATSU LTD), 20. November 1981 (1981-11-20)

## Beschreibung

Die gegenständliche Erfindung betrifft eine Anlage für den Transport von Schüttgut mit längs einer Führungsbahn, wie Schienen oder einem Seil, bzw. mittels eines Förderseiles bewegbaren Transportbehältern zur Aufnahme des Schüttgutes, wobei jeder Transportbehälter aus miteinander gelenkig verbundenen Behälterteilen besteht, welche mittels einer Verriegelungseinrichtung in Schließstellung gehalten sind, wodurch sie das Schüttgut aufnehmen können und welche weiters mit einer Steuereinrichtung ausgebildet sind, durch welche sie in eine Offenstellung verschwenkbar sind, worauf das in ihnen enthaltene Schüttgut nach unten abströmt.

Es ist bekannt, Schüttgüter entweder mittels Förderbändern kontinuierlich oder mittels Behältern diskontinuierlich über große Entfernungen zu transportieren. Soferne für den Transport kübelartige Transportbehälter verwendet werden, ist es weiters bekannt, diese zweiteilig auszubilden, wobei die beiden Behälterteile miteinander gelenkig verbunden und mittels einer Steuereinrichtung in eine Schließstellung bzw. in eine Offenstellung verschwenkbar sind. In der Schließstellung, in welcher sie mittels einer Verriegelungseinrichtung aneinander gehalten sind, kann in die Behälter am Beginn der Förderanlage von oben her Schüttgut eingebracht werden. Hierauf werden sie z.B. mittels eines Förderseiles zum Ende der Förderanlage bewegt, wo die beiden Behälterteile voneinander entriegelt und auseinander verschwenkt werden, worauf das im betreffenden Transportbehälter befindliche Schüttgut nach unten abströmt.
Hierdurch kann Schüttgut z.B. in einen Vorratsbehälter oder in den Laderaum eines Transportfahrzeuges gefördert werden.

Aus der US 5 346 052 A ist eine derartige Anlage bekannt, bei welcher jeder Transportbehälter mit einer Steuereinrichtung ausgebildet ist, welche am Ende der Förderanlage betätigt wird, um die Verriegelungseinrichtung zu lösen, wodurch die beiden Behälterteile in ihre Offenstellung verschwenkbar sind. Da jedoch dabei die beiden Behälterteile durch das Gewicht des Fördergutes verschwenkt werden, ist deren Verschwenkung nicht exakt gesteuert, weswegen nicht gewährleistet ist, daß das Schüttgut im richtigen Zeitpunkt und damit an der richtigen Stelle aus dem betreffenden Transportbehälter abströmt.

Der gegenständlichen Erfindung liegt somit die Aufgabe zugrunde, eine Anlage zu schaffen, durch welche während der Bewegung der Behälter gewährleistet ist, daß deren Boden an derjenigen Stelle der Bewegungsbahn geöffnet wird, daß das Schüttgut aus diesem an der richtigen Stelle abströmt. Dies wird erfindungsgemäß dadurch erzielt, daß die Verriegelungseinrichtung und die Steuereinrichtung mit Steuerrollen ausgebildet sind, welchen am Ende der Förderanlage befindlichen Steuerschienen zugeordnet sind, mit welchen die Steuerrrollen zusammenwirken, wodurch die Transportbehälter in ihre Offenstellung gebracht werden.

Vorzugsweise enthält die Verriegelungseinrichtung zwei Riegelbacken, an welche ein Stellhebel angelenkt ist, an dessen freiem Ende eine Steuerrolle gelagert ist. Dabei können die Riegelbacken unter Wirkung einer Rückstellfeder stehen. Nach einer bevorzugten Ausführungsform sind die beiden Riegelbacken an einem Traggestell verschwenkbar gelagert und ist. der Stellhebel mittels eines ersten Lenkers an einem der beiden Riegelbacken und mittels eines zweiten Lenkers gleichfalls am Traggestell gelagert.

Vorzugsweise sind weiters an einem der beiden Behälterteile durch einen Stellhebel verschwenkbare Riegelbacken und am anderen Behälterteil ein den Riegelbacken zugeordneter Riegelbolzen angeordnet. Dabei können von den beiden Behälterteilen nach unten Bolzen abragen, an deren freien Enden Steuerrollen, welche mit zugeordneten Steuerschienen zusammenwirken, gelagert sind. Vorzugsweise sind die Steuerschienen an der Oberseite eines am Ende der Förderanlage befindlichen Traggestelles angeordnet.

Der Gegenstand der Erfindung ist nachstehend anhand eines in der Zeichnung dargestellten Ausführungsbeispieles näher erläutert. Es zeigen:
- Fig. 1: eine erfindunngsgemäße Anlage, in Vorderansicht,
- Fig. 2: eine Verriegelungseinrichtung der Transportbehälter, in derjenigen Stellung, in welcher die beiden Behälterteile miteinander verriegelt sind,
- Fig. 2a: diese Verriegelungseinrichtung, in derjenigen Stellung, in welcher die beiden Behälterteile gegeneinander in ihre Offenstellung verschwenkbar sind,
- Fig. 3: den unteren Teil eines Behälters, in Seitenansicht und in gegenüber Fig. 1 vergrößerter Darstellung, und
- Fig. 4: eine Teil dieser Anlage, in Draufsicht.

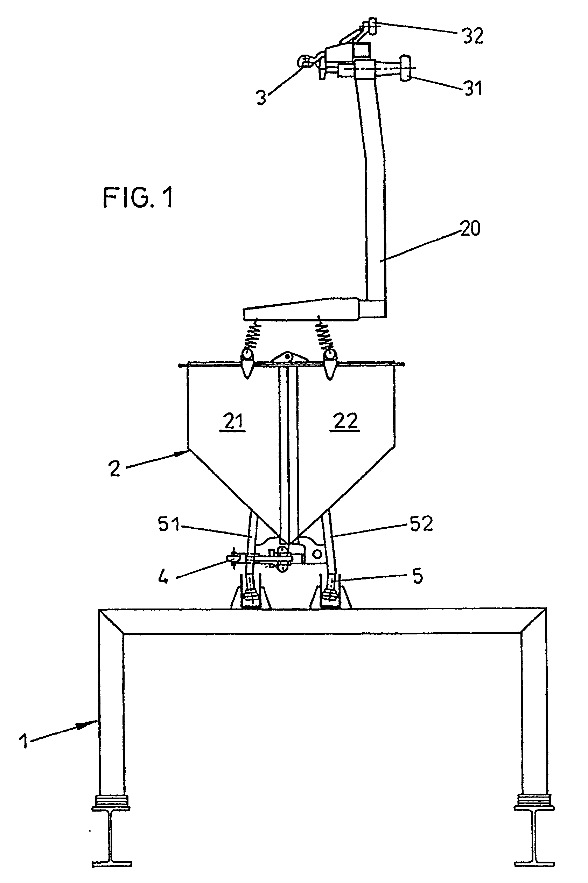

Die in Fig. 1 dargestellte Förderanlage weist an ihrem Ende ein quaderförmiges Traggestell 1 auf, unterhalb welchem z.B. ein Transportfahrzeug, welches mit Schüttgut beschickt werden soll, abgestellt werden kann. Die Förderanlage enthält eine Vielzahl von Förderbehältern 2, welche am unteren Ende einer Tragstange 20 angeordnet sind. Am oberen Ende der Tragstange 20 sind ein Laufwerk 31 und ein Klemmapparat 32 angeordnet. Mittels des Klemmapparates 32 kann die Tragstange 20 mit dem Behälter 2 an ein Förderseil 3 angekuppelt werden. Durch die Bewegung des Förderseiles 3 können die Behälter 2 vom Anfang der Förderanlage, wo sie von oben her mit Schüttgut beaufschlagt werden, an das Ende der Förderanlage bewegt werden, wo das in den Behältern 2 enthaltene Schüttgut an ein Transportfahrzeug, einen Vorratsbehälter od.dgl. abgegeben wird.
Die Ausbildung des Laufwerkes 31 und des Klemmapparates 32 ist aus der Seilbahntechnik zur Beförderung von Personen bekannt.

Da die Transportbehälter 2 an ihrer Oberseite offen sind, können sie von oben her mit Schüttgut befüllt werden. Um das Schüttgut am Ende der Förderanlage aus den Behälter 2 abgeben zu können, sind diese angenähert vertikal in zwei Behälterteile 21 und 22 unterteilt, welche mittels einer Verriegelungseinrichtung 4 in der geschlossenen Stellung gehalten sind, wodurch die Behälter 2 zur Aufnahme von Schüttgut bereit sind. Zudem ist eine Steuereinrichtung 5 vorgesehen, durch welche die beiden Behälterteile 21 und 22 am Ende der Förderanlage auseinander verschwenkt werden können, wodurch deren trichterförmig ausgebildeter Boden geöffnet wird, sodaß das Schüttgut nach unten abströmen kann.

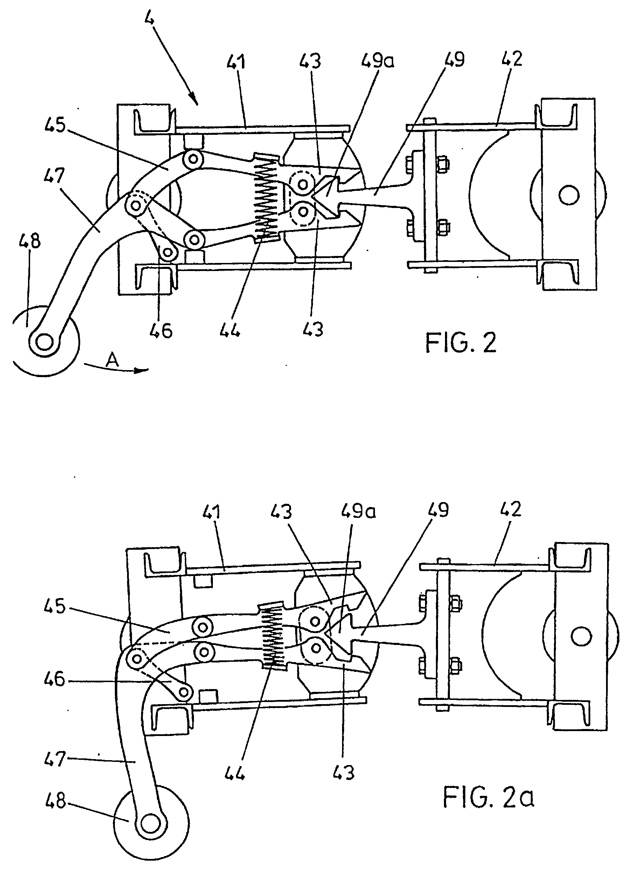

Wie dies aus Fig. 2 ersichtlich ist, weist die Verriegelungseinrichtung 4 einen an der Unterseite des Behälterteiles 21 befestigten Tragrahmen 41 auf, an welchem zwei Riegelbacken 43 gelagert sind, welche unter Wirkung einer Druckfeder 44 stehen, durch welche sie zueinander verschwenkt sind. An die Rastbacken 43 ist unter Zwischenschaltung eines frei beweglichen ersten Lenkers 45 und eines am Tragrahmen 41 gelagerten zweiten Lenkers 46 ein Stellhebel 47 angelenkt, an dessen freiem Ende eine Steuerrolle 48 gelagert ist.
An der Unterseite des zweiten Behälterteiles 22 ist ein zweiter Tragrahmen 42 befestigt, von welchem ein Riegelbolzen 49 abragt, welcher an seinem freien Ende mit einem dreieckigen Riegelelement 49a ausgebildet ist, welches von den gegengleich ausgebildeten Riegelbacken 43 hintergriffen wird.

In Fig. 2 ist diejenige Lage der beiden Behälterteile 21 und 22 dargestellt, in welcher sich diese in der Schließstellung befinden, wobei sie mittels der Vierriegelungseinrichtung 4 in dieser Stellung gehalten sind. Hierdurch ist der Boden des Transportbehälters 2 geschlossen und kann in diesen von oben her Schüttgut eingefüllt werden. Am Ende der Förderanlage befindet. sich eine Steuerschiene, auf welche die Steuerrolle 48 aufläuft, wodurch der Stellhebel 47 in Richtung des Pfeiles A verschwenkt wird. Hierdurch werden die Riegelbacken 43 entgegen der Wirkung der Feder 44 in ihre Offenstellung verschwenkt, wodurch von ihnen der Riegelbolzen 49 freigegeben wird.
Diese Lagen des Stellhebels 47 und der Riegelbacken 43 ist in Fig. 2a dargestellt. Sobald in der Folge die beiden Behälterteile 21 und 22 auseinander verschwenkt werden, wird der Boden des Behälters 2 geöffnet, wodurch das in diesem enthaltene Schüttgut nach unten abströmen kann.

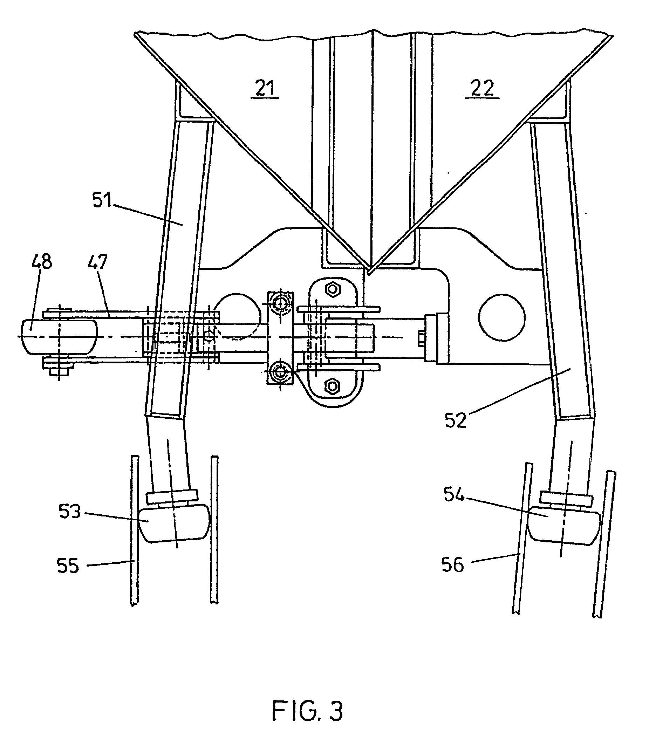

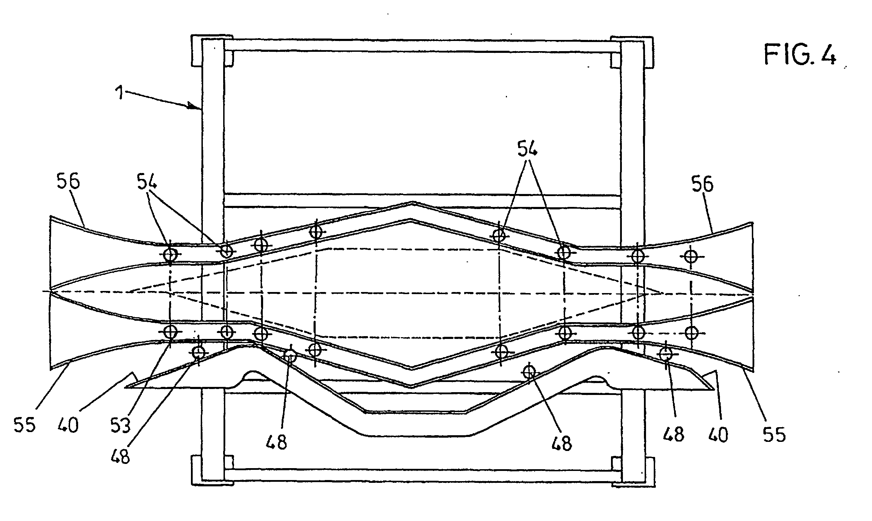

Die Verschwenkung der beiden Behälterteile 21 und 22 auseinander erfolgt durch die Steuereinrichtung 5, welche nachstehend anhand der Fig. 3 und Fig. 4 erläutert ist. Von den beiden Behälterteilen 21 und 22 ragen nach unten Bolzen 51 und 52 ab, an deren freien Enden Steuerrollen 53 bzw. 54 gelagert sind. Am Ende der Förderanlage sind weitere Steuerschienen 55 und 56 vorgesehen, welche zur Bewegungssteuerung der beiden Behälterteile 21 und 22 dienen.

Wie dies weiters aus Fig. 4 der Zeichnung ersichtlich ist, ist auf der Oberseite des Traggestelles 1 eine Steuerschiene 40 vorgesehen, welche der Steuerrolle 48 des Stellhebels 47 zugeordnet ist. Weiters befinden sich auf der Oberseite des Traggestelles 1 zwei Kulissen 55 und 56, welche zur Führung der an den Bolzen 51 und 52 gelagerten Steuerrollen 53 bzw. 54 dienen und welche hierfür mit trichterförmigen Einführöffnungen ausgebildet sind.

Die Wirkungsweise dieser Förderanlage ist wie folgt:
Am Beginn der Förderanlage sind die beiden Teile 21 und 22 miteinander verriegelt, wodurch der Boden der Transportbehälter 2 verschlossen ist. Hierdurch kann in diese von oben her Schüttgüt eingebracht werden. In der Folge werden die Behälter 2 an das ständig umlaufende Förderseil 3 angekuppelt und hierdurch längs der Anlage bewegt. Am Ende der Förderanlage werden die Behälter 2 vom Förderseil 3 abgekuppelt und längs Führungsschienen mit gegenüber der Geschwindigkeit des Förderseiles 3 verminderter Geschwindigkeit in den oberhalb des Traggestelles 1 befindlichen Steuerbereich hineinbewegt.

Dabei läuft einerseits die Steuerrolle 48 auf die Führungsschiene 40 auf, wodurch der Stellhebel 47 in die in Fig. 2a dargestellte Lage verschwenkt wird. Hierdurch werden die beiden Behälterteile 21 und 22 voneinander entriegelt. Andererseits gelangen die Steuerrollen 52 und 54 in die Kulissen 55 und 56 hinein. Hierdurch werden die beiden Behälterteile 21 und 22 durch die in den Kulissen 55 und 56 geführten Steuerrollen 53 und 54 auseinander verschwenkt, wodurch der Boden des betreffenden Behälter 2 geöffnet wird, sodaß das in diesem befindliche Schüttgut nach unten abströmen kann.
Da das Traggestell 1 in diesem Bereich nach unten hin mit einer Öffnung ausgebildet ist, gelangt hierdurch das Schüttgut in einen unterhalb des Traggestelles 1 befindlichen weiteren Behälter, z.B. in den Behälter eines Transportfahrzeuges oder in einen Vorratsbehälter.

Hierdurch ist somit eine Anlage geschaffen, durch welche eine automatisierte und genau gesteuerte Entleerung der Förderbehälter einer Förderanlage gewährleistet ist.

## Patentansprüche

1. Anlage für den Transport von Schüttgut mit längs einer Führungsbahn, wie Schienen oder einem Seil, bzw. mittels eines Förderseiles bewegbaren Transportbehältern (2) zur Aufnahme des Schüttgutes, wobei jeder Transportbehälter aus miteinander gelenkig verbundenen Behälterteilen (21, 22) besteht, welche mittels einer Verriegelungseinrichtung (4) in Schließstellung gehalten sind, wodurch sie das Schüttgut aufnehmen können und welche weiters mit einer Steuereinrichtung (5) ausgebildet sind, durch welche sie auseinander in eine Offenstellung verschwenkbar sind, worauf das in ihnen enthaltene Schüttgut nach unten abströmt, **dadurch gekennzeichnet, daß** die Verriegelungseinrichtung (4) und die Steuereinrichtung (5) mit Steuerrollen (48, 53, 54) ausgebildet sind, welchen am Ende der Förderanlage befindliche Steuerschienen (40, 55, 56) zugeordnet sind, mit welchen die Steuerrollen [48, 53, 54) zusammenwirken, wodurch die Transportbehälter (2) in ihre Offenstellung gebracht werden.

2. Anlage nach Patentanspruch 1, **dadurch gekennzeichnet, daß** die Verriegelungseinrichtung (4) zwei Riegelbacken (43) enthält, an welche ein Stellhebel (47) angelenkt ist, an dessen freiem Ende eine Steuerrolle (48) gelagert ist.

3. Anlage nach Patentanspruch 3, **dadurch gekennzeichnet, daß** die beiden Riegelbacken (43) unter Wirkung einer Rückstellfeder (44) stehen.

4. Anlage nach einem der Patentansprüche 2 und 3, **dadurch gekennzeichnet, daß** die beiden Riegelbacken (43) an einem Traggestell (41) verschwenkbar gelagert sind und daß der Stellhebel (47) mittels eines ersten Lenkers (45) an einem der beiden Riegelbacken (43) und mittels eines zweiten Lenkers (46) gleichfalls am Traggestell (41) gelagert ist.

5. Anlage nach einem der Patentansprüche 1 bis 4, **dadurch gekennzeichnet, daß** an einem der beiden Behälterteile (21, 22) durch einen Stellhebel (47) verschwenkbare Riegelbacken (43) und am anderen Behälterteil (22) ein den Riegelbacken (43) zugeordneter Riegelbolzen (49) angeordnet sind.

6. Anlage nach einem der Patentansprüche 1 bis 5, **dadurch gekennzeichnet, daß** von den beiden Behälterteilen (21, 22) nach unten Bolzen (51, 52) abragen, an deren freien Enden Steuerrollen (53, 54), welche mit zugeordneten Steuerschienen (55, 56) zusammenwirken, gelagert sind.

7. Anlage nach einem der Patentansprüche 1 bis 6, **dadurch gekennzeichnet, daß** die Steuerschienen (40, 55, 56) an der Oberseite eines am Ende der Förderanlage befindlichen Traggestelles (1) angeordnet sind.

## Claims

1. An installation for transporting bulk material, having transport containers (2) for accommodating the bulk material which are movable along a guideway, such as rails or a cable, or by means of a hauling cable, each transport container consisting of container parts (21, 22) connected articulatedly together, which container parts (21, 22) are held in the closed position by means of a locking means (4), whereby they may accommodate the bulk material, and which are additionally provided with a control means (5), by which they may be swivelled apart into an open position, whereupon the bulk material contained therein flows downwards, **characterised in that** the locking means (4) and the control means (5) are provided with control rollers (48, 53, 54), with which are associated control rails (40, 55, 56) located at the end of the conveying installation, with which control rails (40, 55, 56) the control rollers (48, 53, 54) interact, whereby the transport containers (2) are brought into their open position.

2. An installation according to claim 1, **characterised in that** the locking means (4) comprises two locking jaws (43), to which an adjusting lever (47) is coupled, at the free end of which there is mounted a control roller (48).

3. An installation according to claim 3, **characterised in that** the two locking jaws (43) are acted upon by a restoring spring (44).

4. An installation according to one of claims 2 and 3, **characterised in that** the two locking jaws (43) are mounted swivellably on a supporting frame (41) and **in that** the adjusting lever (47) is mounted on one of the two locking jaws (43) by means of a first connecting rod (45) and likewise on the supporting frame (41) by means of a second connecting rod (46).

5. An installation according to one of claims 1 to 4, **characterised in that** locking jaws (43) swivellable by an adjusting lever (47) are arranged on one of the two container parts (21, 22) and a locking bolt (49) associated with the locking jaws (43) is arranged on the other container part.(22).

6. An installation according to one of claims 1 to 5, **characterised in that** bars (51, 52) project downwards from the two container parts (21, 22), on the free end of which bars (51, 52) there are mounted control rollers (53, 54), which interact with associated control rails (55, 56).

7. An installation according to one of claims 1 to 6, **characterised in that** the control rails (40, 55, 56) are arranged on the top of a supporting structure (1) located at the end of the conveying installation.

## Revendications

1. Installation pour le transport d'un produit en vrac comportant des conteneurs de transport (2), déplaçables le long d'une voie de guidage, telle que des rails ou un câble, ou au moyen d'un câble de transport, et destinés à recevoir le produit en vrac, chaque conteneur de transport étant constitué de parties de conteneur (21, 22) reliées entre elles de manière articulée, qui sont maintenues en position fermée au moyen d'un dispositif de verrouillage (4), ce qui fait qu'elles peuvent recevoir le produit en vrac, et qui sont réalisées en outre avec un dispositif de commande (5) au moyen duquel elles peuvent s'écarter l'une de l'autre par pivotement, dans une position ouverte, après quoi le produit en vrac qu'elles contiennent s'écoule vers le bas, **caractérisée en ce que** le dispositif de verrouillage (4) et le dispositif de commande (5) comportent des rouleaux de commande (48, 53, 54) qui sont affectés à des rails de commande (40, 55, 56) se trouvant à l'extrémité de l'installation de transport, avec lesquels coopèrent les rouleaux de commande (48, 53, 54), ce qui fait que les conteneurs de transport (2) sont amenés dans leur position ouverte.

2. Installation selon la revendication 1, **caractérisée en ce que** le dispositif de verrouillage (4) contient deux mâchoires de verrouillage (43) auxquelles est articulé un levier de réglage (47) à l'extrémité libre duquel est monté un rouleau de commande (48).

3. Installation selon la revendication 3, **caractérisée en ce que** les deux mâchoires de verrouillage (43) sont soumises à l'action d'un ressort de rappel (44).

4. Installation selon l'une des revendications 2 et 3, **caractérisée en ce que** les deux mâchoires de verrouillage (43) sont montées de manière à pouvoir pivoter sur un bâti portant (41) et **en ce que** le levier de réglage (47) est monté, au moyen d'un premier bras oscillant (45), sur l'une des deux mâchoires de verrouillage (43) et, au moyen d'un deuxième bras oscillant (46), également sur le bâti portant (41).

5. Installation selon l'une des revendications 1 à 4, **caractérisée en ce que** sur l'une des deux parties de conteneur (21, 22) est disposée une mâchoire de verrouillage (43) qui peut pivoter au moyen d'un levier de réglage (47), et sur l'autre partie de conteneur (22), est disposé un boulon de verrouillage (49) associé à la mâchoire de verrouillage (43).

6. Installation selon l'une des revendications 1 à 5, **caractérisée en ce que** des deux parties de conteneur (21, 22) dépassent vers le bas des tiges (51, 52) aux extrémités libres desquelles sont montés des rouleaux de commande (53, 54) qui coopèrent avec des rails de commande (55, 56) associés.

7. Installation selon l'une des revendications 1 à 6, **caractérisée en ce que** les rails de commande (40, 55, 56) sont disposés sur le côté supérieur d'un bâti portant (1) qui se trouve à l'extrémité de l'installation de transport
